# EUROPÄISCHE PATENTSCHRIFT

(11) **EP 4 011 817 B1**
(45) Veröffentlichungstag und Bekanntmachung des Hinweises auf die Patenterteilung: **09.04.2025**
(21) Anmeldenummer: 21212489.5
(22) Anmeldetag: 06.12.2021
(51) Int. Cl.: B60S 9/12, B60Q 1/24, B60Q 1/26

(54) **BELEUCHTUNGSEINRICHTUNG**
LIGHTING DEVICE
DISPOSITIF D'ÉCLAIRAGE

(30) Priorität: 10.12.2020 DE 202020107117 U
(43) Veröffentlichungstag der Anmeldung: 15.06.2022
(73) Patentinhaber: Alois Kober GmbH, 89359 Kötz (DE)
(72) Erfinder: Harfmann, Patrick, 89129 Langenau (DE)
(74) Vertreter: ERNICKE Patent- und Rechtsanwälte PartmbB

(56) Entgegenhaltungen:
- EP-A1- 2 801 393
- DE-A1- 102007 024 936
- DE-A1- 102017 130 139
- DE-U1- 202014 004 539
- GB-A- 2 527 308
- JP-U- H0 589 397
- JP-U- H04 138 088
- KR-A- 20140 040 950
- US-A1- 2007 013 537
- US-A1- 2008 137 338
- US-A1- 2014 231 732
- US-A1- 2017 174 188
- US-A1- 2020 039 477

## Beschreibung

Die Erfindung betrifft eine fluidische, insbesondere hydraulische, Hubstütze mit einer Beleuchtungseinrichtung mit den Merkmalen im Oberbegriff des Anspruchs 1.

Ein solche hydraulische Hubstütze mit einer Beleuchtungseinrichtung ist aus der US 2007/0013537 A1 bekannt. Die Beleuchtungseinrichtung ist als integraler Bestandteil an einem Basisteil eines Stützfußes befestigt. Die Beleuchtungseinrichtung soll beim Reifenwechseln helfen und ist in bodennaher Beleuchtungsfunktion am Stützfuß angeordnet.

Aus der DE 10 2017 130 139 A1 ist eine andere hydraulische Hubstütze eines Straßenfahrzeugs mit einer Beleuchtungseinrichtung bekannt, welche Leuchtmittel umfasst, die beidseits des oberen Zylinderendes und von diesem rückversetzt an einem Montagebeschlag angeordnet sind, der zur Hubstützenbefestigung an einem Längsträger des Fahrzeugchassis dient.

Die US 2020/0039477 A1 offenbart einen teleskopierbaren Elektrozylinder mit einzelnen Lichtern am oberen Zylinder, die einzeln und direkt am oberen Zylindermantel montiert sind. Die Lichter sind verteilt nur an einer Umfangsseite des Zylinders angeordnet. Sie leuchten in einem beschränkten Bereich, um einen Reifenwechsel zu erleichtern.

Aus der GB 2 527 308 A ist ein teleskopierbarer Stützfuß einer Baumaschine bekannt, der ein rechteckiges Leuchtmittel mit senkrechter Ausrichtung umfasst, dass an der Außenseite des Zylindergehäuses gleitend angeordnet und mit der ausfahrbarer Kolbenstange fest verbunden ist.

Es ist Aufgabe der vorliegenden Erfindung, eine fluidische, insbesondere hydraulische, Hubstütze mit einer verbesserten Beleuchtungseinrichtung aufzuzeigen.

Die Erfindung löst diese Aufgabe mit den Merkmalen in den unabhängigen Ansprüchen.

Die Beleuchtungseinrichtung weist ein ringförmiges Leuchtmittel auf, welches zur Montage an einem Zylindergehäuse der fluidischen, insbesondere hydraulischen Hubstütze eines Straßenfahrzeugs vorgesehen und ausgebildet ist. Besonders günstig ist hierbei die Ausbildung für eine Montage am unteren Ende des Zylindergehäuses.

Eine Ausbildung für eine umfangseitige, bevorzugt koaxiale, Montage am Mantel des Zylindergehäuses ist vorgesehen . Das montierte ringförmige Leuchtmittel umschliesst das Zylindergehäuse umfangseitig.

Die fluidische, insbesondere hydraulische, Hubstütze und das Zylindergehäuse können eine aufrechte, insbesondere senkrechte Lage und Ausrichtung an der Montage- oder Befestigungsstelle am Straßenfahrzeug haben.

Die ringförmige Ausbildung des Leuchtmittels hat verschiedene Vorteile. Sie bietet eine bessere Beleuchtungswirkung und bessere Montagemöglichkeiten als beim Stand der Technik.

Das ringförmige Leuchtmittel kann nach mehreren verschiedenen Richtungen abstrahlen. Es kann einen besonders guten und großen Leuchtkegel bilden. Der Leuchtkegel kann insbesondere nach unten strahlen. Das ringförmige Leuchtmittel kann zusätzlich oder alternativ auch nach oben strahlen.

Die Richtungsangaben unten/oben beziehen sich auf die Anbau- oder Montagestellung am Straßenfahrzeug bzw. auf die Unterseite und Oberseite des Hubzylinders. An der Unterseite fährt bei der Hubstützenbetätigung ein Zylinderteil, insbesondere die Kolbenstange, aus.

Das Leuchtmittel kann unter einer Befestigungsstelle am Chassis des Straßenfahrzeugs, insbesondere unter einem Längsträger, hindurch bis in den unterhalb der Fahrzeugmitte liegenden Untergrundbereich strahlen. Hierdurch kann die Beleuchtungseinrichtung einen Mehrfachnutzen erhalten. Sie kann nicht nur den Standbereich am Untergrund der Hubstütze beleuchten. Sie kann bei Dunkelheit auch das Hantieren mit einem im inneren Chassisbereich angeordneten Ersatzrad, einem Tank oder dgl. erleichtern. Eine großflächige Ausleuchtmöglichkeit des Bereichs unter dem Chassis hat zudem Sicherheitsaspekte.

Eine Ausbildung des Leuchtmittels zur Montage am unteren Ende des Zylindergehäuses ist hierfür besonders vorteilhaft. Dieser Bereich befindet sich unterhalb des Fahrzeugchassis und ist für den weiten Strahlkegel besonders vorteilhaft. Andererseits kann das ringförmige Leuchtmittel am Zylindergehäuse, insbesondere am Umfang, formschlüssig geführt und gehalten werden. Es kann besonders sicher und positionsgenau angebracht werden. Bei der Fahrt kann ein Stützfuß am unteren Ende des eingefahrenen Zylinders das Leuchtmittel vor Umwelteinflüssen, z.B. Steinschlag, schützen. Eine Montage am unteren Ende des Zylinders ist auch hierfür von besonderem Vorteil.

Eine Adaption des ringförmigen, insbesondere kreisringförmigen, Leuchtmittels an das bevorzugt im Querschnitt ebenfalls kreisringförmige Zylindergehäuse und eine umfangseitige koaxiale Montage am Mantel des Zylindergehäuses sind für eine einfache und sichere Montage besonders günstig. Hierbei ist eine kraftschlüssige und/oder formschlüssige Befestigung, insbesondere Klemmbefestigung, am Zylindergehäuse möglich. Ferner sind andere, z.B. ovale oder prismatische, Ring- und Querschnittsformen möglich.

Das Leuchtmittel kann einen ringförmigen Träger mit einer bevorzugt ringförmigen Leuchtenanordnung und einem Befestigungsmittel aufweisen. Dieses kann z.B. für eine kraftschlüssige Befestigung einen bevorzugt axial geschlitzten Klemmring am ringförmigen Träger und ein Spannmittel aufweisen. Alternativ ist eine andere Ausbildung des Befestigungsmittels möglich.

Der ringförmige Träger kann an seiner axialen Frontseite einen ringförmigen und bevorzugt vertieften Leuchtenhalter für die Aufnahme einer Leuchtenanordnung aufweisen, die z.B. von ein oder mehreren Leuchtelementen gebildet werden kann. Das oder die Leuchtelemente können vorteilhafterweise als einfarbige oder mehrfarbige LEDs ausgebildet sein.

Die axiale Frontseite und der Leuchtenhalter können in der Montagestellung nach unten zum Stützfuß der Hubstütze gerichtet sein. An seiner anderen axialen Frontseite kann der ringförmige Träger einen Auslass für ein Kabel oder dergleichen aufweisen. Dieses kann in der Montagestellung geschützt hinter dem Zylinder nach oben zum Fahrzeugchassis geführt werden.

Die Leuchtenanordnung kann Licht in Axialrichtung, insbesondere in Montagestellung zum Untergrund, emittieren. Die Leuchtenanordnung kann auch Licht quer zur Axialrichtung, insbesondere in Radialrichtung, emittieren. Der Träger kann hierfür z.B. ein oder mehrere Wandöffnungen mit einem entsprechenden Leuchtelement aufweisen. Hierdurch kann z.B. unter dem Chassis und parallel zu dessen Hauptebene Licht seitlich abgestrahlt werden. Dies kann an einer oder mehreren Stellen der Leuchtenanordnung und des Trägers geschehen.

Die vor- und nachgenannte Axialausrichtungen beziehen sich auf die Längsachse des Zylinders des Leuchtmittels.

Die Leuchtenanordnung kann verschiedenen Zwecken dienen. Sie kann einerseits in Axialrichtung des Zylinders und des ringförmigen Leuchtmittels Licht zur Beleuchtung des Stütztellers beim Ein- und Ausfahren des Zylinders und auch des Untergrunds abstrahlen. Ferner kann das Licht variiert werden. Es kann einfarbig oder mehrfarbig sein und kann auch Farbwechsel bieten. Es kann als ambientes Licht dienen, das beim Einschalten dauerhaft oder intermittierend strahlt und den Untergrund des Straßenfahrzeugs rund um die ausgefahrene Hubstütze beleuchtet. Das Licht kann andererseits als Signallicht eingesetzt werden, wobei z.B. Funktionsstörungen der Hubstütze, eine unzureichende Untergrundqualität oder dgl. durch moduliertes Licht, z.B. pulsierendes Licht in roter Farbe, signalisiert werden.

Das Leuchtmittel kann ein oder mehrere weitere Komponenten beinhalten. Dies kann z.B. eine elektronische Kamera, ein Bewegungsmelder, ein Datenspeicher, eine Tageslicht/Dunkelheit detektierender Lichtsensor oder dgl. sein.

Das Leuchtmittel kann ein Kommunikationsmittel aufweisen. Dieses kann drahtlos oder leitungsgebunden, z.B. als am Auslass herausgeführtes Kabel, ausgebildet sein. Über das Kommunikationsmittel können bedarfsweise Energie und/oder Signale von und nach außen übermittelt werden.

Die Beleuchtungseinrichtung kann eine eigene Energieversorgung für das Leuchtmittel aufweisen. Diese kann z.B. im oder am Leuchtmittel angeordnet sein. Die Beleuchtungseinrichtung kann auch mit einer externen Energieversorgung, z.B. einer Boardbatterie des Straßenfahrzeugs, über das Kommunikationsmittel verbunden sein.

Die Beleuchtungseinrichtung kann eine ggf. eigene Steuerung für das Leuchtmittel aufweisen. Diese kann im oder am Leuchtmittel angeordnet sein. Auch eine externe Anordnung der Steuerung und eine Signalverbindung über das Kommunikationsmittel sind möglich. Die Steuerung für die Beleuchtungseinrichtung kann hardwaremäßig oder softwaremäßig, z.B. als Softwaremodul, ausgebildet sein. Sie kann auch in eine andere Steuerung, z.B. die Steuerung einer Hubstütze oder einer Hubstützenanordnung, integriert sein.

Die Energie und/oder Signale können für die Versorgung und Ansteuerung der Leuchtenanordnung und ggf. auch von einer oder mehreren weiteren Komponenten dienen. Von der Leuchtenanordnung können auf Befehl einer Steuerung der Hubstützenanordnung oder der Hubstütze optische Funktionsmeldungen, Warnsignale oder dgl. emittiert werden. Auf ein Signal des Bewegungsmelders hin kann z.B. die Leuchtenanordnung und ggf. eine Kamera eingeschaltet werden. Eine Kamera kann zur Prüfung des Untergrunds beim Ausfahren einer Hubstütze eingesetzt werden und kann ggf. zusammen mit der Leuchtenanordnung bei Vorliegen eine Ausfahrbefehls für die Hubstützenanordnung oder die Hubstütze eingeschaltet werden. Über einen Lichtsensor kann bei Einbruch der Dunkelheit automatisch die Leuchtenanordnung eingeschaltet und bei einem Aufhellen wieder ausgeschaltet werden. Darüber hinaus gibt es weitere Funktionen.

Die Beleuchtungseinrichtung kann ein eigenes bevorzugt mobiles und drahtlos kommunizierendes Bedienmittel aufweisen. Alternativ kann ein bereits vorhandenes Bedienmittel der Hubstützenanordnung genutzt werden. Dies kann ein spezielles und adaptiertes Bedienmittel sein. Es ist außerdem möglich, eine App für ein bereits vorhandenes generisches Bedienmittel, z.B. ein Smartphone, vorzusehen. Mit dem Bedienmittel können Steuerbefehle, Zustandsmeldungen, Quittungssignale oder dgl. Daten und/oder Signale ausgetauscht werden.

Die Hubstütze kann eine ausfahrbare Kolbenstange mit einem endseitigen und bevorzugt plattenförmigen Stützfuß aufweisen. Die Hubstütze kann eine eigene dezentrale Fluidversorgung haben. Sie kann alternativ an eine zentrale Fluidversorgung von mehreren Hubstützen, z.B. auch einer kompletten Hubstützenanordnung mit z.B. vier Hubstützen, angeschlossen sein.

Die Erfindung betrifft auch eine Hubstützenanordnung für ein Straßenfahrzeug mit mehreren solcher fluidischen Hubstützen, die allesamt oder teilweise eine Beleuchtungseinrichtung der beanspruchten Art aufweisen. Die Hubstützenanordnung kann eine Nivelliereinrichtung aufweisen, mit der über die Hubstützen eine Nivellierung des Fahrzeugchassis auf eine gewünschte Raumlage, z.B. eine abgesenkte Horizontallage, möglich ist.

Die Beleuchtungseinrichtung und das ringförmige Leuchtmittel können als Zubehör ausgebildet und an bestehenden Hubstützen und Hubstützenanordnungen bedarfsweise nachgerüstet werden. Die Beleuchtungseinrichtung kann auch bereits an einer Hubstütze fest verbaut sein und mit dieser zusammen ausgeliefert werden. Ferner ist es möglich, die Beleuchtungseinrichtung im Wege der Erstausrüstung an einem Straßenfahrzeug zusammen mit einer oder mehreren Hubstützen und ggf. einer Hubstützenanordnung zu montieren.

In den Unteransprüchen sind weitere vorteilhafte Ausgestaltungen der Erfindung angegeben.

Die beanspruchte Hubstütze und Hubstützenanordnung mit der Beleuchtungseinrichtung sowie das beanspruchte Straßenfahrzeug können folgende Ausgestaltungsmerkmale aufweisen. Diese können einzeln oder in beliebiger Kombination miteinander eingesetzt werden.

Das ringförmige Leuchtmittel der Beleuchtungseinrichtung kann einen ringförmigen Träger aufweisen, der in der vorgenannten Weise umfangseitig am Mantel des Zylindergehäuse befestigbar oder befestigt ist.

Der ringförmige Träger kann an seiner einen axialen Frontseite einen ringförmigen, bevorzugt vertieften, Leuchtenhalter für die Aufnahme einer bevorzugt ringförmigen Leuchtenanordnung aufweisen. Der ringförmige Träger kann an seiner anderen axialen Frontseite einen Auslass für ein Kabel oder dgl. aufweisen.

Die bevorzugt ringförmige Leuchtenanordnung kann ein oder mehrere Leuchtelemente, insbesondere ein- oder mehrfarbige LED(s), umfassen.

Die Beleuchtungseinrichtung, insbesondere das Leuchtmittel, kann eine oder mehrere weitere Komponenten, insbesondere eine elektronische Kamera, einen Bewegungsmelder oder dgl., umfassen.

Die Beleuchtungseinrichtung kann eine Energieversorgung für das Leuchtmittel und ggf. weitere Komponenten aufweisen. Die Energieversorgung kann im oder am Leuchtmittel angeordnet oder extern angeordnet sein.

Die beanspruchte Hubstütze kann die Beleuchtungseinrichtung mit einem Leuchtmittel umfassen, welches ein Kabel aufweist, das an der zum Straßenfahrzeug weisenden Rückseite der Hubstütze angeordnet ist.

Die Hubstütze kann eine ausfahrbare Kolbenstange mit einem dortigen endseitigen Stützfuss, insbesondere einem Stützteller, aufweisen.

Die Hubstütze kann eine eigene dezentrale Fluidversorgung aufweisen. Die Hubstütze kann auch an eine zentrale Fluidversorgung einer Hubstützenanordnung angeschlossen sein, wobei die zentrale Fluidversorgung zwei oder mehr Hubstützen mit Hydraulikfluid versorgt.

Die beanspruchte und mit der Beleuchtungseinrichtung ausgerüstete Hubstützenanordnung kann eine Nivelliereinrichtung zum Nivellieren des Chassis des Straßenfahrzeugs umfassen.

Das beanspruchte Straßenfahrzeug kann ein Fahrgestell oder Chassis, einen bevorzugt motorisierten Fahrzeugkopf, eine hintere Achsanordnung, ggf. einen Aufbau und eine Hubstützenanordnung mit mehrere Hubstützen und die einzeln oder mehrfach vorhandene Beleuchtungseinrichtung umfassen. Die Hubstützen können am Fahrzeugkopf, insbesondere am dortigen Einstieg einer Fahrerkabine, sowie am hinteren Bereich des Fahrgestells, insbesondere am Fahrzeugheck und/oder an deiner hinteren Achsanordnung, angeordnet sein.

Das Straßenfahrzeug kann als Wohnmobil oder als Kastenwagen ausgebildet sein. Es kann einen Wohnaufbau und/oder Kastenaufbau haben.

Die Erfindung ist in den Zeichnungen beispielhaft und schematisch dargestellt. Im Einzelnen zeigen:
- Figur 1:: ein Straßenfahrzeug mit fluidischen Hubstützen und einer Beleuchtungseinrichtung in einer Seitenansicht,
- Figur 2:: eine vergrößerte Darstellung einer am Heckbereich des Fahrzeugs angeordneten Hubstütze und Beleuchtungseinrichtung gemäß Figur 1,
- Figur 3:: eine perspektivische Darstellung der Anordnung von Figur 2,
- Figur 4:: eine perspektivische Darstellung einer fluidischen Hubstütze und einer daran montierten Beleuchtungseinrichtung,
- Figur 5:: eine geschnitte Ansicht der Anordnung von Figur 4,
- Figur 6:: eine Draufsicht auf die Anordnung von Figur 4 und 5,
- Figur 7:: eine perspektivische Ansicht eines ringförmigen Leuchtmittels mit einem Träger und einem Befestigungsmittel,
- Figur 8:: eine andere perspektivische Ansicht des Trägers von Figur 7 und
- Figur 9:: eine Unteransicht des ringförmigen Leuchtmittels mit dem Träger und einer darin aufgenommenen Leuchtanordnung.

Die Erfindung betrifft eine fluidische, insbesondere hydraulische, Hubstütze (5), die mit einer Beleuchtungseinrichtung (1) ausgerüstet ist. Die Erfindung betrifft ferner eine Hubstützenanordnung (3) mit mehreren fluidischen Hubstützen (5) und mindestens einer Beleuchtungseinrichtung (1). Die Erfindung bezieht sich auch auf ein Straßenfahrzeug (2) mit mindestens einer fluidischen Hubstütze (5) und einer Beleuchtungseinrichtung (1).

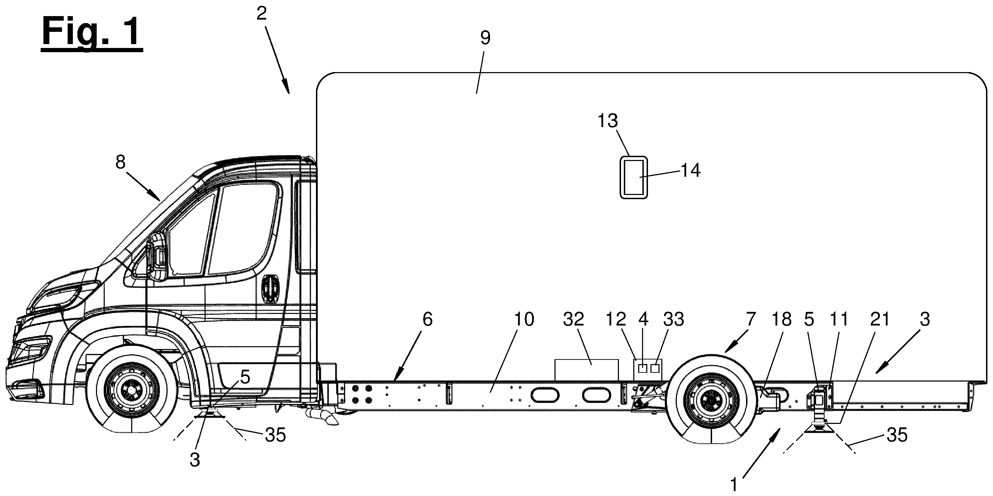

Figur 1 zeigt in einer Seitenansicht ein Straßenfahrzeug (2) mit einer fluidischen Hubstützenanordnung (2), welche mehrere fluidische Hubstützen (5) aufweist. Mindestens einer Hubstütze (5), vorzugsweise allen Hubstützen (5), ist eine Beleuchtungseinrichtung (1) zugeordnet.

Das Straßenfahrzeug (1) ist z.B. als Kraftfahrzeug ausgebildet. Es weist ein Fahrgestell (6) mit einer hinteren Achsanordnung (7) und einem motorisierten frontseitigen Fahrzeugkopf (8) mit einer Vorderachse sowie einem Aufbau (9) auf dem Fahrgestell (6) auf. Der Aufbau (9) kann in beliebiger Weise, z.B. kastenartig ausgebildet sein. Im gezeigten Ausführungsbeispiel handelt es sich um einen Wohnaufbau, wobei das Straßenfahrzeug (2) als Wohnmobil ausgebildet ist.

Das Fahrgestell (6) kann z.B. als Leiterrahmen ausgebildet sein und Längsträger (10) sowie ggf. Querträger aufweisen. Es kann mit dem Fahrzeugkopf (8) fest verbunden sein. Der Fahrzeugkopf (8) kann als motorisierter und bevorzugt frontgetriebener Zugkopf ausgebildet sein, wobei das Fahrgestell (6) als ggf. tiefer gelegtes Anbauchassis für die nachträgliche Montage, am Zugkopf gestaltet ist. Evtl. Höhenunterschiede zwischen Zugkopfchassis und Anbauchassis können durch einen Adapter ausgeglichen werden.

In einer anderen Ausführung kann der Fahrzeugkopf (8) einen Motor mit Getriebe, eine Vorderachse und eine Lenkeinrichtung sowie eine Fahrerkabine aufweisen, wobei die hintere Achsanordnung (7) angetrieben ist. Die hintere Achsanordnung (7) kann eine oder mehrere Achsen, z.B. eine Tandemachse oder eine Tripleachse, aufweisen.

In einer anderen und nicht dargestellten Ausführung kann das Straßenfahrzeug (2) als Fahrzeuganhänger, z.B. als Wohnwagen oder Caravan, ausgebildet sein. Das Fahrgestell (6) ist dann mit einer Achsanordnung (7) und einer starren oder beweglichen Deichsel ausgestattet.

Die einen oder mehreren Hubstützen (5) sind vorzugsweise als hydraulische Hubstützen ausgebildet. Die fluidischen Hubstützen (5) weisen jeweils einen fluidischen Hubzylinder (15) mit einer zentralen Achse (23) und einem Zylindergehäuse (16) auf. Die Hubstützen sind in geeigneter Weise über einen Montagebeschlag (11) am Fahrgestell (6), z.B. seitlich an einem Längsträger (10) oder einem Heckträger des Fahrgestells oder an einer Achsanordnung (7), montiert und befestigt.

Die Hubstützen (5) können an beiden Längsseiten des Straßenfahrzeugs (2) montiert sein. In der gezeigten Ausführungsform umfasst die Hubstützenanordnung (3) vier verteilte Hubstützen (5), wobei zwei Hubstützen (5) im Heckbereich des Fahrgestells (6) und zwei Hubstützen (5) im Frontbereich angeordnet sind. Die vorderen Hubstützen (5) können z.B. unter der Einstiegstelle am Fahrzeugkopf (8) angeordnet und montiert sein.

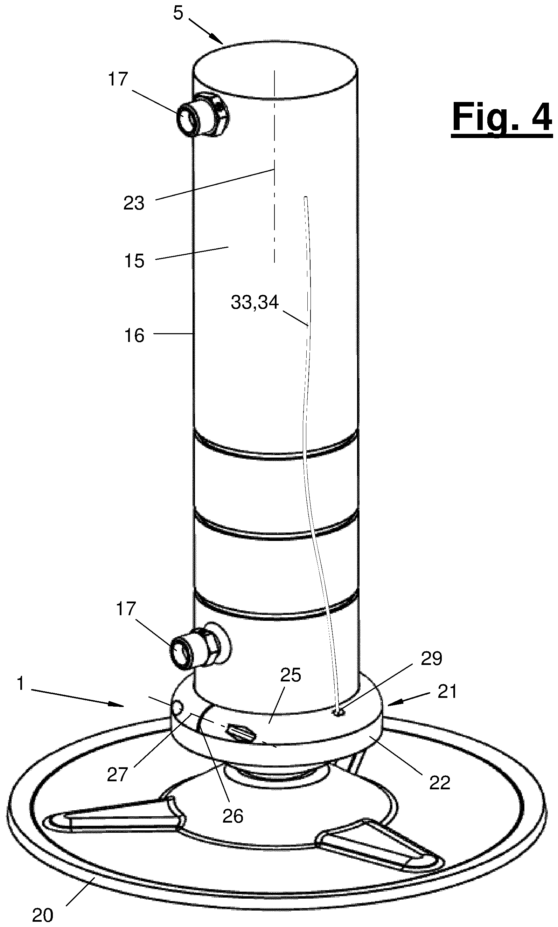

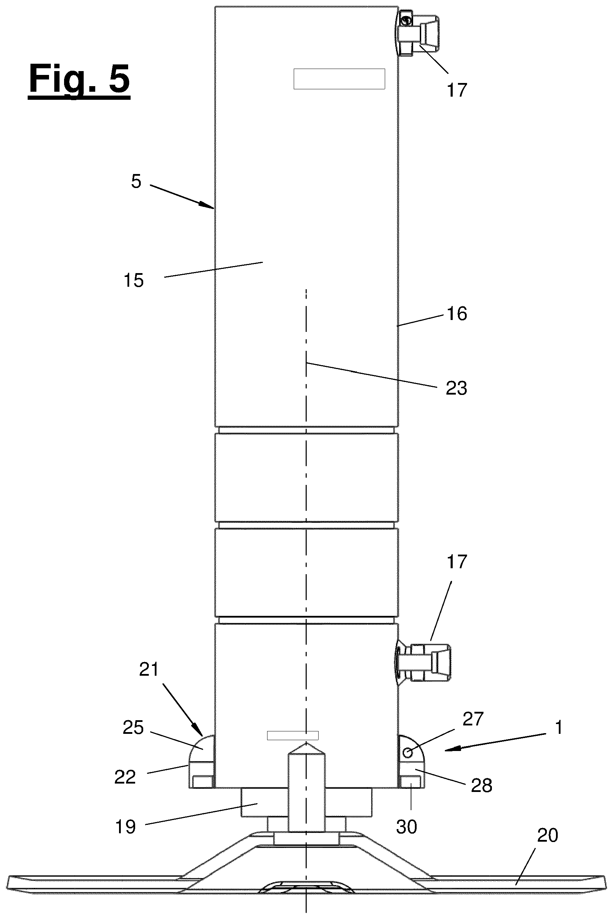

Figur 4 und 5 verdeutlichen beispielhaft den Aufbau einer fluidischen, insbesondere hydraulischen, Hubstütze (5). Der Hubzylinder (15) weist eine ausfahrbare Kolbenstange (19) auf, an deren freiem Ende ein Stützfuß (20) in geeigneter Weise, insbesondere gelenkig, angeordnet ist.

Der Stützfuß (20) kann z.B. eine prismatische oder runde Plattenform haben.

Der Hubzylinder (15) weist ein oder mehrere Fluidanschlüsse (17) auf, die z.B. am Mantel des Zylindergehäuses (16) mit Abstand übereinander angeordnet sind. Die Fluidanschlüsse (17) sind in geeigneter Weise mit einer Fluidversorgung (18), insbesondere Hydraulikversorgung, verbunden. Wie Figur 1 bis 3 verdeutlichen, kann dies eine dezentrale Fluidversorgung (18) sein, wobei bevorzugt jeder Hubzylinder (15) eine eigene Fluidversorgung (18) aufweist. Diese ist z.B. eigenständig am Fahrgestell (6) nahe an der Hubstütze (5) montiert.

Die Hubstützenanordnung (3) kann eine Steuerung (12) aufweisen, welche die dezentralen Fluidversorgungen (18) und die fluidischen Hubstützen (5) ansteuert. In einer anderen Ausführung kann die Hubstützenanordnung (3) eine zentrale und zentral gesteuerte Fluidversorgung aufweisen, an die alle fluidischen Hubstützen (5) angeschlossen sind.

Die Steuerung (12) kann eine elektronische Steuer- und Recheneinheit, Daten- und Programmspeicher sowie I/O-Schnittstellen aufweisen. Sie kann auch eine Nivelliereinrichtung (4) mit einer Nivelliersensorik und einer Nivelliersteuerung umfassen, welche die fluidischen Hubstützen (5) ansteuert und eine Nivellierung und Ausrichtung des Fahrgestells (6) in einer gewünschten räumlichen Winkellage, z.B. in der horizontalen, ermöglicht. Die Nivelliersteuerung kann als hardwaremäßiges und/oder softwaremäßiges Steuermodul in die Steuerung (12) der Hubstützenanordnung (3) integriert sein.

Die Steuerung (12) kann ferner ein Kommunikationsmittel (33) für eine leitungsgebundene oder bevorzugt drahtlose Kommunikation nach außen, insbesondere zu einem vorzugsweise mobilen Bedienmittel (13) mit einem Display (14) aufweisen. Das Bedienmittel (13) kann z.B. als Smartphone ausgebildet sein und kann ebenfalls ein entsprechendes Kommunikationsmittel aufweisen. Eine drahtlose Kommunikation kann in beliebiger Weise, z.B. über Bluetooth, Funk, Infrarot oder dgl., erfolgen.

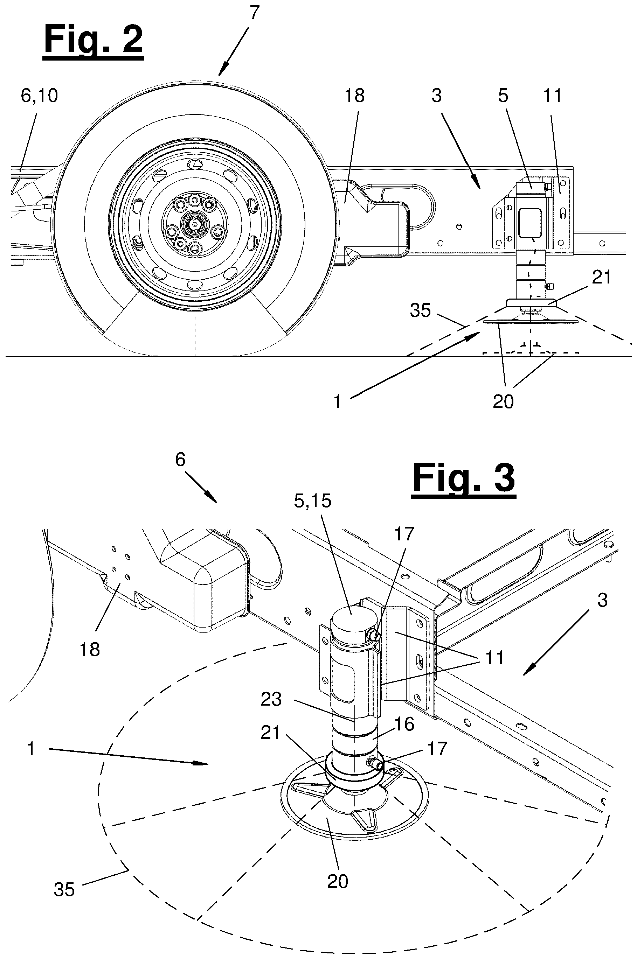

Die Beleuchtungseinrichtung (1) ist in Figur 2 bis 9 näher dargestellt. Sie weist ein ringförmiges Leuchtmittel (21) auf, das zur Montage am Zylindergehäuse (16) vorgesehen und ausgebildet ist. Dies betrifft insbesondere eine Montage am unteren Ende des Zylindergehäuses (16). Wie Figur 2 und 3 verdeutlichen, befindet sich das untere Ende des Zylindergehäuses (16) in Montagestellung unterhalb des Fahrgestells (6) und dessen Längsträgern (10).

Das ringförmige Leuchtmittel (21) ist an das Zylindergehäuse (16) adaptiert. Es ist zur umfangsseitigen, insbesondere koaxialen, Montage am Mantel des Zylindergehäuses (16) vorgesehen und ausgebildet. In der gezeigten Ausführungsform haben das Leuchtmittel (21) eine Kreisringform und das Zylindergehäuse (16) eine zylindrische Form mit kreisförmigem Querschnitt. Alternativ sind andere Querschnitt- und Ringformen möglich.

Das ringförmige Leuchtmittel (21) weist einen ringförmigen Träger (22) mit einer bevorzugt ringförmigen Leuchtenanordnung (30) und einem Befestigungsmittel (24) auf. Das Befestigungsmittel (24) ist für eine kraftschlüssige und/oder formschlüssige Verfestigung des Trägers (22) am Zylindergehäuse (16) vorgesehen und ausgebildet. In der gezeigten Ausführungsform ist das Befestigungsmittel (24) als Klemmeinrichtung ausgebildet, mit der der Träger (22) am unteren Ende des Zylindergehäuses (16) umfangsseitig festgeklemmt werden kann.

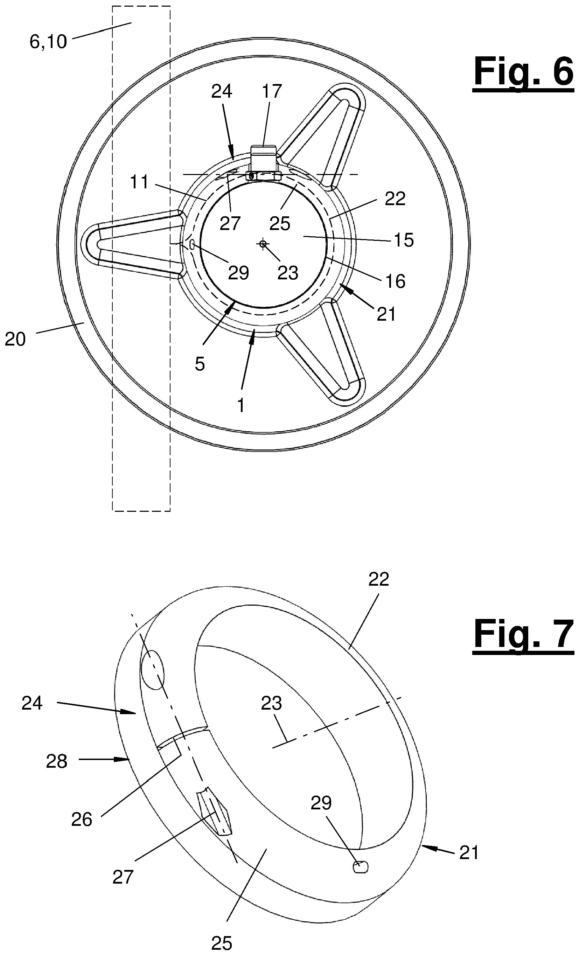

Figur 7 bis 9 verdeutlichen eine beispielhafte Ausführung des klemmenden Befestigungsmittels (24). Es weist einen geschlitzten Klemmring (25) auf, der am ringförmigen Träger (22) in geeigneter Weise angeordnet ist. Der Schlitz oder Spalt (26) kann sich gemäß Figur 7 in Axialrichtung (23) erstrecken. Der Klemmring (25) ist z.B. kragenartig an einem stirnseitigen Ende des z.B. zylindrischen Klemmrings (22) ausgebildet, insbesondere angeformt. Der restliche Teil des Trägers (22) kann ungeschlitzt und mit geschlossenem Umfang ausgebildet sein. Der Träger (22) kann aus Kunststoff, Metall oder einem anderen geeigneten Material bestehen.

Das Befestigungsmittel (24) weist ferner ein Spannmittel (27) auf, mit dem der geschlitzte Klemmring (25) in Umfangsrichtung gespannt und kontrahiert werden kann. Das Spannmittel (27) ist z.B. gemäß Figur 7 als tangentiale Bohrung im Klemmring (25) ausgebildet, die sich über den Spalt (26) hinweg erstreckt und eine durchgesteckte Spannschraube oder dgl. aufnimmt.

In einer anderen Ausgestaltung kann der Träger (22) schellenartig ausgebildet und in mehrere Teile untergliedert sein. Dies können z.B. Halbringe sein, die an einer Seite über ein Gelenk miteinander verbunden sind und an einer anderen Seite einen Verschluss für die gegenseitige Fixierung aufweisen. Ferner sind andere Arten von mehrteiligen und zusammensetzbaren Trägerausbildungen möglich. Günstig ist eine auf dem Zylindergehäuse (16) umfangseitig spannbare und ggf. axial aufschiebbare Trägerausbildung.

In der gezeigten Ausführungsform hat der ringförmige Träger (22) an seiner Innenseite eine glatte Wandung ohne radiale Vorsprünge zur bevorzugt vollflächigen Anlage am Mantel des Zylindergehäuse (16). In einer anderen Ausgestaltung mit einem formschlüssigen Befestigungsmittel können die Trägerinnenseite und der Außenmantel des Zylindergehäuses (16) formschlüssig ineinander greifende Vorsprünge und Vertiefungen aufweisen, die einen Formschluss in Richtung der gemeinsamen Achse (23) und/oder in Umfangsrichtung bieten.

In den genannten Ausführungsvarianten sind die Befestigungsmittel (24) für eine lösbare Fixierung des Leuchtmittels (21) am Hubzylinder (15) ausgebildet. Alternativ kann auch eine feste und dauerhafte Verbindung und Fixierung vorgesehen sein.

Der ringförmige Träger (22) nimmt in geeigneter Weise zumindest eine Leuchtenanordnung (30) auf. Diese kann aus ein oder mehreren einzelnen oder verbundenen Leuchtelementen (31), z.B. LEDs, gebildet sein. Diese können einfarbig oder mehrfarbig sein. Am Träger (22) können ferner ein Kommunikationsmittel (33) und ggf. ein oder mehrere weitere Komponenten (36) angeordnet sein. Der Träger (22) kann auch eine Energieversorgung (32), z.B. in Form einer wechselbaren und/oder wiederaufladbaren Batterie, aufweisen.

In der gezeigten Ausführungsform weist der ringförmige Träger (22) an seiner einen axialen Frontseite einen ringförmigen Leuchtenhalter (28) für die Aufnahme der Leuchtenanordnung (30) auf. Der Leuchtenhalter (28) ist z.B. als ringförmige Vertiefung bzw. als Nut an der besagten Frontseite ausgebildet. Er kann alternativ in anderer Weise ausgebildet und angeordnet sein. Die Leuchtenanordnung (30) kann als geschlossener Ring oder in segmentierter Form ausgebildet sein. Figur 5 verdeutlicht die Anordnung im Schnitt.

Der ringförmige Träger (22) kann an seiner anderen axialen Frontseite einen Auslass (29) für ein Kabel (34) oder dgl. aufweisen. Figur 4, 6, 8 und 9 verdeutlichen diese Ausbildung. Das Kabel (34) kann selbst ein Kommunikationsmittel (33) sein und eine Kommunikationsverbindung nach Außen herstellen, über die Energie und/oder elektrische Signale übertragen werden können.

Der Auslass (29) ist z.B. gemäß Figur 6 am Umfang um 90° versetzt zum Befestigungsmittel (24) angeordnet. Der Auslass (29) kann sich in Montagestellung des ringförmigen Leuchtmittels (21) an der Rückseite des Hubzylinders (15) und an der zum Fahrgestell (6) bzw. Längsträger (10) weisenden Seite befinden. Das Kabel (34) kann dadurch verborgen an der Rückseite des Hubzylinders (15) bis zum Fahrgestell (6) und dort weiter bis zur Steuerung (12) und/oder einer bordeigenen Energieversorgung (32) des Straßenfahrzeugs (2) oder Hubstützenanordnung (3) geführt werden. Dies kann z.B. die Systembatterie des Straßenfahrzeugs (2) sein.

Die Öffnung des nutenartigen Leuchtenhalters (28) und die Leuchtenanordnung (30) weisen in Längsrichtung der Achse (23) und sind in Montagestellung nach unten zum Stützfuß (20) gerichtet. Die Leuchtenanordnung (30) und die ein oder mehreren Leuchtenelemente (31) emittieren Licht mit einer Richtungskomponente in dieser Axialrichtung und schräg dazu. Hierbei kann ein Lichtkegel (35) gebildet werden, der in Figur 1 bis 3 verdeutlicht ist. Dank der Position der Leuchtenanordnung (30) unterhalb des Fahrgestells (6) kann sich der Lichtkegel (35) unter dem Fahrgestell (6) bis in den inneren Chassisbereich erstrecken.

Die Leuchtenanordnung (30) kann außerdem Licht quer zur Axialrichtung (23), z.B. in Radialrichtung, emittieren. Hierfür kann der ringförmige Träger (22) eine oder mehrere Wandöffnungen aufweisen, aus denen die Leuchtenanordnung (30) bzw. ein oder mehrere Leuchtelemente (31) Licht in der besagten Querrichtung emittieren können. Hierdurch kann z.B. gezielt durch horizontal oder schräg emittiertes Licht der innenseitige Fahrzeugbereich unterhalb des Fahrgestells (6) ausgeleuchtet werden.

Die Leuchtenanordnung (30) kann unterschiedliche Leuchteffekte bewirken. Sie kann z.B. die Lichtfarbe konstant halten oder wechseln. Sie kann Dauerlicht oder intermittierendes, insbesondere gepulstes, Licht emittieren. Dies kann z.B. ein pulsierendes rotes Warnlicht sein oder ein grünes Dauerlicht, mit dem ein Warnsignal oder eine positive Zustandsmeldung gegeben werden. Die Leuchtenanordnung (30) kann auch konturiertes Licht emittieren und auf den Untergrund projizieren. Dies kann z.B. ein Bild oder ein Schriftzug, insbesondere ein Logo, sein.

In der gezeigten Ausführungsform ist das Kommunikationsmittel (33) am Träger (22), insbesondere im oder am Leuchtenhalter (28), angeordnet. Das gezeigte Kommunikationsmittel (33) ist leitungsgebunden und weist das besagte Kabel (34) auf. In einer anderen Ausführungsform kann das Kommunikationsmittel (33) drahtlos ausgebildet sein und kann z.B. eine Sende- und Empfangsmodul für Funksignale oder dgl. umfassen.

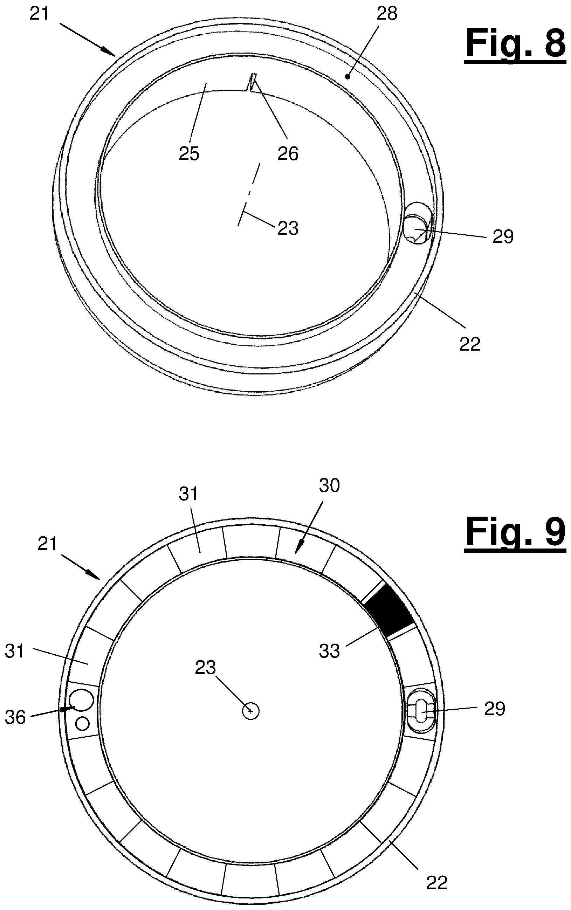

Figur 9 verdeutlicht außerdem die Möglichkeit, am ringförmigen Leuchtmittel (21), insbesondere am Träger (22), einen oder mehrere weitere Komponenten (36) anzuordnen. Dies kann z.B. eine elektronische Kamera oder ein Kameraauge sein. Eine andere Komponente (36) kann ein Bewegungsmelder, ein Lichtsensor oder dgl. sein.

Die Beleuchtungseinrichtung (1) weist eine Energieversorgung (32) für das Leuchtmittel (21) auf, welche auch das Kommunikationsmittel (33) und eine oder mehrere evtl. weitere Komponenten (36) versorgen kann. Die Energieversorgung (32) kann am Leuchtmittel (32) angeordnet sein. Sie kann alternativ in der vorgenannten Weise am Straßenfahrzeug (2) oder an der Hubstützenanordnung (3) oder an anderer Stelle angeordnet sein und kann die Energie über das Kabel (34) oder in anderer geeigneter Weise zuführen.

Die Beleuchtungseinrichtung weist eine Steuerung (12) für das Leuchtmittel (21) auf. Dies kann eine eigene Steuerung sein, die ggf. am Leuchtmittel (21), insbesondere am Träger (22), angeordnet ist. In der gezeigten Ausführungsform wird die Steuerung (12) der Hubstützenanordnung (3) benutzt. Eine Kommunikation und ein Austausch von Steuerungs- und Zustandssignalen sowie anderen Daten kann leitungsgebunden über das Kabel (34) oder drahtlos erfolgen. Mit der Steuerung (12) können die Leuchtenanordnung (30) und evtl. ein oder mehrere weitere Komponenten (36) angesteuert werden. Diese Ansteuerung kann in Abhängigkeit von Signale, insbesondere Zustands- oder Steuersignalen, der Hubstütze (5) oder der Hubstützenanordnung (3) erfolgen.

Bei einem Ausfahren der Hubstütze (5) kann z.B. automatisch und ggf. außenlichtabhängig die Leuchtenanordnung (30) eingeschaltet werden. Auch eine als Kamera ausgebildete weitere Komponente (36) kann automatisch eingeschaltet werden. Die z.B. vom Untergrund unter der Hubstütze (5) aufgenommenen Kamerabilder können in der Steuerung (12) ausgewertet werden, um die Eignung und Abstützfähigkeit des Untergrunds zu prüfen und zu bewerten. Bei ungenügender Eignung kann der Ausfahrvorgang gestoppt und ein Warnsignal abgegeben werden.

Andererseits kann eine als Bewegungsmelder ausgebildete weitere Komponente (36) bei einem abgestellten Straßenfahrzeug (2) Bewegungen von Tieren oder dgl. unter dem Fahrgestell (6) detektieren und an die Steuerung (12) melden, die daraufhin das Leuchtmittel (21), insbesondere die Leuchtenanordnung (30) und ggf. eine weitere Komponente (36), z.B. eine Kamera, einschaltet. Ein Ausschalten der Leuchtenanordnung (30) kann in beliebig geeigneter Weise, z.B. über einen vorprogrammierten Zeitablauf, ein detektiertes äußeres Ereignis oder dgl. erfolgen.

Die Beleuchtungseinrichtung (1) kann ein bevorzugt mobiles und drahtlos kommunizierendes Bedienmittel (13) aufweisen. Dies kann ein eigenes dediziertes Bedienmittel (13) sein. Alternativ kann ein bereits vorhandenes Bedienmittel (13) der Hubstützenanordnung (3) und/oder des Straßenfahrzeugs (2) genutzt werden. Ferner ist es möglich, ein bereits vorhandenes generisches Bedienmittel, z.B. in Form eines Smartphones, zu nutzen. Zum Umfang der Beleuchtungseinrichtung (1) kann in diesen Fällen eine Softwarekomponente, z.B. eine App, gehören.

Das Bedienmittel (13) kann ein Display (14) aufweisen, auf dem Meldungen der Beleuchtungseinrichtung (1) und ggf. der Hubstützenanordnung (3) sowie auch des Straßenfahrzeugs (2) angezeigt werden. Auf dem Display (14) kann eine Bedienmaske angezeigt werden, über die Eingaben an die Steuerung (12) und an die Beleuchtungseinrichtung (1) möglich sind. Über das Bedienelement (13) kann z.B. das Leuchtmittel (21), insbesondere die Leuchtenanordnung (30), eingeschaltet und bedarfsweise gesteuert werden, z.B. zur Abgabe von moduliertem Licht.

Abwandlungen der gezeigten und beschriebenen Ausführungsformen sind im Rahmen der Ansprüche in beliebiger Weise möglich. Die Merkmale der verschiedenen Ausführungsformen können miteinander kombiniert oder ausgetauscht werden.

### BEZUGSZEICHENLISTE

- 1: Beleuchtungseinrichtung
- 2: Straßenfahrzeug
- 3: Hubstützenanordnung
- 4: Nivelliereinrichtung
- 5: Hubstütze fluidisch
- 6: Fahrgestell
- 7: Achsanordnung
- 8: Fahrzeugkopf, Zugkopf
- 9: Aufbau
- 10: Längsträger
- 11: Montagebeschlag
- 12: Steuerung
- 13: Bedienmittel
- 14: Display
- 15: Hubzylinder
- 16: Zylindergehäuse
- 17: Fluidanschluss
- 18: Fluidversorgung
- 19: Kolbenstange
- 20: Stützfuß
- 21: Leuchtmittel, Leuchtring
- 22: Träger, Tragring
- 23: Achse
- 24: Befestigungsmittel
- 25: Klemmring
- 26: Schlitz
- 27: Spannmittel
- 28: Leuchtenhalter
- 29: Auslass
- 30: Leuchtenanordnung
- 31: Leuchtelement, LED
- 32: Energieversorgung
- 33: Kommunikationsmittel
- 34: Kabel
- 35: Lichtkegel
- 36: weitere Komponente

## Patentansprüche

1. Fluidische, insbesondere hydraulische, Hubstütze (5) für ein Straßenfahrzeug (2), wobei die Hubstütze (5) einen Hubzylinder (15) mit einer zentralen Achse (23) und einem Zylindergehäuse (16) sowie eine Beleuchtungseinrichtung (1) aufweist, **dadurch**
**gekennzeichnet, dass** die Beleuchtungseinrichtung (1) ein ringförmiges Leuchtmittel (21) aufweist, das am Zylindergehäuse (16), insbesondere am unteren Ende des Zylindergehäuses (16), und umfangseitig, insbesondere koaxial, am Mantel des Zylindergehäuses (16) angeordnet sowie bevorzugt kraftschlüssig und/oder formschlüssig befestigt ist, wobei das montierte ringförmige Leuchtmittel (21) das Zylindergehäuse (16) umfangseitig umschliesst.

2. Hubstütze nach Anspruch 1, **dadurch**
**gekennzeichnet, dass** das ringförmige Leuchtmittel (21) an das Zylindergehäuse (16) adaptiert ist und zur umfangseitigen, bevorzugt koaxialen, Montage am Mantel des Zylindergehäuses (16) vorgesehen und ausgebildet ist.

3. Hubstütze nach Anspruch 1 oder 2, **dadurch**
**gekennzeichnet, dass** das ringförmige Leuchtmittel (21) einen ringförmigen Träger (22) mit einer bevorzugt ringförmigen Leuchtenanordnung (30) und einem Befestigungsmittel (24) aufweist, welches bevorzugt für eine kraftschlüssige und/oder formschlüssige Befestigung des Trägers (22) am Zylindergehäuses (16) vorgesehen und ausgebildet ist.

4. Hubstütze nach Anspruch 3, **dadurch**
**gekennzeichnet, dass** der ringförmige Träger (22) an seiner einen axialen Frontseite einen ringförmigen, bevorzugt vertieften, Leuchtenhalter (28) für die Aufnahme einer bevorzugt ringförmigen Leuchtenanordnung (30) aufweist.

5. Hubstütze nach Anspruch 3 oder 4, **dadurch**
**gekennzeichnet, dass** das
Befestigungsmittel (24) einen geschlitzten Klemmring (25) am ringförmigen Träger (22) und ein Spannmittel (27) aufweist.

6. Hubstütze nach einem der vorhergehenden Ansprüche, **dadurch gekennzeichnet, dass** das Leuchtmittel (21) ein Kommunikationsmittel (33), insbesondere ein Kabel (34), aufweist.

7. Hubstütze nach einem der vorhergehenden Ansprüche, **dadurch gekennzeichnet, dass** die Beleuchtungseinrichtung (1) eine Steuerung (12) für das Leuchtmittel (21) aufweist, wobei die Steuerung (12) im oder am Leuchtmittel (21) angeordnet oder extern angeordnet ist.

8. Hubstütze nach einem der vorhergehenden Ansprüche, **dadurch gekennzeichnet, dass** die Beleuchtungseinrichtung (1) ein bevorzugt mobiles und drahtlos kommunizierendes Bedienmittel (13) oder eine App für ein Bedienmittel, insbesondere ein Smartphone, umfasst.

9. Hubstütze nach einem der vorhergehenden Ansprüche, **dadurch gekennzeichnet, dass** das ringförmige Leuchtmittel (21) Licht in Axialrichtung (23), insbesondere in Ausfahrrichtung des Hubzylinders (15), und ggf. quer dazu, insbesondere in Radialrichtung, emittiert.

10. Hubstütze nach einem der vorhergehenden Ansprüche, **dadurch gekennzeichnet, dass** die Hubstütze (5) eine ausfahrbare Kolbenstange (19) mit einem endseitigen und bevorzugt plattenförmigen Stützfuß (20) aufweist.

11. Hubstütze nach einem der vorhergehenden Ansprüche, **dadurch gekennzeichnet, dass** die Hubstütze (5) einen Montagebeschlag (11) zur Montage an einem Straßenfahrzeug (2), bevorzugt an dessen Fahrgestell (6), insbesondere seitlich an einem Längsträger (10) oder an einem Heckträger des Fahrgestells oder an einer Achsanordnung (7), aufweist.

12. Hubstützenanordnung für ein Straßenfahrzeug (2) mit mehreren fluidischen, insbesondere hydraulischen, Hubstützen (5), **dadurch gekennzeichnet, dass** die Hubstützen (5) eine Beleuchtungseinrichtung (1) mit einem ringförmigen Leuchtmittel (21) aufweisen und nach einem der Ansprüche 1 bis 11 ausgebildet sind.

13. Hubstützenanordnung nach Anspruch 12, **dadurch**
**gekennzeichnet, dass** die Hubstützenanordnung (3) eine Steuerung (12) und/oder eine Energieversorgung (32) und/oder ein Bedienmittel (13) aufweist, an welche das ringförmige Leuchtmittel (21) angebunden ist.

14. Straßenfahrzeug, insbesondere Kraftfahrzeug, mit einer Hubstützenanordnung (3), die mehrere fluidische, insbesondere hydraulische, Hubstützen (5) umfasst, **dadurch gekennzeichnet, dass** die Hubstützenanordnung (3) eine oder mehrere Hubstützen (5) mit einer Beleuchtungseinrichtung (1) aufweist und nach einem der Ansprüche 12 oder 13 ausgebildet ist.

15. Straßenfahrzeug nach Anspruch 14, **dadurch**
**gekennzeichnet, dass** das
Straßenfahrzeug (2) ein Fahrgestell (6), einen bevorzugt motorisierten Fahrzeugkopf (8), eine hintere Achsanordnung (7) und einen Aufbau (9) aufweist, wobei bevorzugt der Fahrzeugkopf (8) als motorisierter und frontgetriebener Zugkopf und das Fahrgestell (6) als ggf. tiefer gelegtes Anbauchassis ausgebildet sind.

## Claims

1. Fluidic, in particular hydraulic, lifting support (5) for a road vehicle (2), wherein the lifting support (5) comprises a lifting cylinder (15), which has a central axis (23) and a cylinder housing (16), and an illumination device (1), **characterized in that** the illumination device (1) comprises a ring-shaped illuminant (21) which is arranged on the cylinder housing (16), in particular at the lower end of the cylinder housing (16), and circumferentially, in particular coaxially, on the lateral face of the cylinder housing (16) and which is preferably secured in frictional and/or interlocking fashion, wherein the assembled ring-shaped illuminant (21) surrounds the cylinder housing (16) circumferentially.

2. Lifting support according to Claim 1, **characterized in that** the ring-shaped illuminant (21) is adapted to the cylinder housing (16) and provided and formed for circumferential, preferably coaxial, assembly on the lateral face of the cylinder housing (16).

3. Lifting support according to Claim 1 or 2, **characterized in that** the ring-shaped illuminant (21) comprises a ring-shaped support (22) having a preferably ring-shaped luminaire arrangement (30) and a fastening means (24), which is preferably provided and formed for frictional and/or interlocking fastening of the support (22) to the cylinder housing (16).

4. Lifting support according to Claim 3, **characterized in that** on its one axial front side, the ring-shaped support (22) comprises a ring-shaped, preferably recessed, luminaire holder (28) for receiving a preferably ring-shaped luminaire arrangement (30).

5. Lifting support according to Claim 3 or 4, **characterized in that** the fastening means (24) comprises a slotted clamping ring (25) on the ring-shaped support (22) and a tensioning means (27).

6. Lifting support according to any of the preceding claims, **characterized in that** the illuminant (21) comprises a communication means (33), in particular a cable (34).

7. Lifting support according to any of the preceding claims, **characterized in that** the illumination device (1) comprises a controller (12) for the illuminant (21), wherein the controller (12) is arranged in or on the illuminant (21) or arranged externally.

8. Lifting support according to any of the preceding claims, **characterized in that** the illumination device (1) comprises a preferably mobile and wirelessly communicating operating means (13) or an app for an operating means, in particular a smartphone.

9. Lifting support according to any of the preceding claims, **characterized in that** the ring-shaped illuminant (21) emits light in the axial direction (23), in particular in the extension direction of the lift cylinder (15), and optionally transversely thereto, in particular in the radial direction.

10. Lifting support according to any of the preceding claims, **characterized in that** the lifting support (5) comprises an extendable piston rod (19) having an end-side and preferably slab-shaped support foot (20).

11. Lifting support according to any of the preceding claims, **characterized in that** the lifting support (5) comprises an assembly fitting (11) for assembly on a road vehicle (2), preferably on the chassis (6) thereof, in particular laterally on a side member (10) or on a rear support of the chassis or on an axle arrangement (7).

12. Lifting support assembly for a road vehicle (2) having a plurality of fluidic, in particular hydraulic, lifting supports (5), **characterized in that** the lifting supports (5) comprise an illumination device (1) having a ring-shaped illuminant (21) and are formed according to any of Claims 1 to 11.

13. Lifting support assembly according to Claim 12, **characterized in that** the lifting support assembly (3) comprises a controller (12) and/or a power supply (32) and/or an operating means (13), to which the ring-shaped illuminant (21) is connected.

14. Road vehicle, in particular motor vehicle, having a lifting support assembly (3) comprising a plurality of fluid, in particular hydraulic, lifting supports (5), **characterized in that** the lifting support assembly (3) comprises one or more lifting supports (5) having an illumination device (1) and is formed according to either of Claims 12 and 13.

15. Road vehicle according to Claim 14, **characterized in that** the road vehicle (2) comprises a chassis (6), a preferably motorized vehicle head (8), a rear axle assembly (7) and a superstructure (9), wherein by preference the vehicle head (8) takes the form of a motorized and front-driven tractor head and the chassis (6) takes the form of an optionally lowered attachable chassis.

## Revendications

1. Béquille de levage (5) fluidique, en particulier hydraulique, pour un véhicule routier (2), la béquille de levage (5) présentant un vérin de levage (15), pourvu d'un axe central (23) et d'un boîtier cylindrique (16) ainsi qu'un dispositif d'éclairage (1), **caractérisée en ce que** le dispositif d'éclairage (1) présente une source de lumière (21) annulaire qui est agencée sur le boîtier cylindrique (16), en particulier au niveau de l'extrémité inférieure du boîtier cylindrique (16), et de manière périphérique, en particulier coaxialement, sur l'enveloppe du boîtier cylindrique (16) ainsi que fixée de préférence à force et/ou par complémentarité de forme, la source de lumière (21) annulaire montée entourant le boîtier cylindrique (16) de manière périphérique.

2. Béquille de levage selon la revendication 1, **caractérisée en ce que** la source de lumière (21) annulaire est adaptée au boîtier cylindrique (16) et prévue et réalisée pour le montage périphérique, de préférence coaxial, sur l'enveloppe du boîtier cylindrique (16).

3. Béquille de levage selon la revendication 1 ou 2, **caractérisée en ce que** la source de lumière (21) annulaire présente un support (22) annulaire pourvu d'un agencement lumineux (30) de préférence annulaire et d'un moyen de fixation (24), qui est de préférence prévu et réalisé pour une fixation à force et/ou par complémentarité de forme du support (22) sur le boîtier cylindrique (16).

4. Béquille de levage selon la revendication 3, **caractérisée en ce que** le support (22) annulaire présente, sur sa face frontale axiale, un support (28) de lampe annulaire, de préférence en retrait, destiné à recevoir un agencement lumineux (30) de préférence annulaire.

5. Béquille de levage selon la revendication 3 ou 4, **caractérisée en ce que** le moyen de fixation (24) présente une bague de serrage (25) fendue sur le support (22) annulaire et un moyen de serrage (27).

6. Béquille de levage selon l'une des revendications précédentes, **caractérisée en ce que** la source de lumière (21) présente un moyen de communication (33), en particulier un câble (34).

7. Béquille de levage selon l'une des revendications précédentes, **caractérisée en ce que** le dispositif d'éclairage (1) présente un dispositif de commande (12) pour la source de lumière (21), le dispositif de commande (12) étant agencé dans ou sur la source de lumière (21) ou de manière externe.

8. Béquille de levage selon l'une des revendications précédentes, **caractérisée en ce que** le dispositif d'éclairage (1) comprend un moyen d'actionnement (13) de préférence mobile et communiquant sans fil ou une appli pour un moyen d'actionnement, en particulier un téléphone intelligent.

9. Béquille de levage selon l'une des revendications précédentes, **caractérisée en ce que** la source de lumière (21) émet de la lumière dans la direction axiale (23), en particulier dans le sens de déploiement du vérin de levage (15) et le cas échéant transversalement par rapport à celui-ci, en particulier dans la direction radiale.

10. Béquille de levage selon l'une des revendications précédentes, **caractérisée en ce que** la béquille de levage (5) présente une tige de piston (19) pouvant être déployée pourvue d'un pied d'appui (20) côté d'extrémité et de préférence sous forme de plaque.

11. Béquille de levage selon l'une des revendications précédentes, **caractérisée en ce que** la béquille de levage (5) présente une garniture de montage (11) pour le montage sur un véhicule routier (2), de préférence sur son châssis (6), en particulier latéralement sur un longeron (10) ou sur un support arrière du châssis ou sur un agencement d'essieu (7).

12. Agencement de béquilles de levage pour un véhicule routier (2), pourvu de plusieurs béquilles de levage (5) fluidiques, en particulier hydrauliques, **caractérisé en ce que** les béquilles de levage (5) présentent un dispositif d'éclairage (1) pourvu d'une source de lumière (21) annulaire et sont réalisées selon l'une des revendications 1 à 11.

13. Agencement de béquilles de levage selon la revendication 12, **caractérisé en ce que** l'agencement (3) de béquilles de levage présente un dispositif de commande (12) et/ou une alimentation en énergie (32) et/ou un moyen d'actionnement (13), auxquels la source de lumière (21) annulaire est raccordée.

14. Véhicule routier, en particulier véhicule automobile, pourvu d'un agencement (3) de béquilles de levage, qui comprend plusieurs béquilles de levage (5) fluidiques, en particulier hydrauliques, **caractérisé en ce que** l'agencement (3) de béquilles de levage présente une ou plusieurs béquilles de levage (5) pourvue(s) d'un dispositif d'éclairage (1) et est réalisé selon l'une des revendications 12 ou 13.

15. Véhicule routier selon la revendication 14, **caractérisé en ce que** le véhicule routier (2) présente un châssis (6), une partie avant (8) de véhicule, de préférence motorisée, un ensemble d'essieu (7) arrière et une carrosserie (9), la partie avant (8) de véhicule étant de préférence réalisée comme un tracteur motorisé et à traction avant et le châssis (6) étant réalisé comme un châssis monté, le cas échéant situé plus bas.
